Europäisches Patentamt

European Patent Office

Office européen des brevets

(11) Veröffentlichungsnummer: **0 187 965**

**A2**

# (12) EUROPÄISCHE PATENTANMELDUNG

(21) Anmeldenummer: 85115866.7

(22) Anmeldetag: 12.12.85

(51) Int. Cl.⁴: **B 60 S 1/34**

(30) Priorität: 17.01.85 DE 3501338

(43) Veröffentlichungstag der Anmeldung:
23.07.86 Patentblatt 86/30

(84) Benannte Vertragsstaaten:
FR GB IT

(71) Anmelder: SWF Auto-Electric GmbH
Stuttgarter Str. 119
D-7120 Bietigheim-Bissingen(DE)

(72) Erfinder: Noack, Klauspeter
Willsbacher Strasse 23
D-7104 Obersulm 1(DE)

(72) Erfinder: Prohaska, Hans
Nelkenweg 44
D-7120 Bietigheim-Bissingen(DE)

(54) Wischanlage.

(57) Es wird eine Wischanlage mit einer in einer Lagerbuchse gelagerten Wischerwelle vorgeschlagen, wobei die Lagerbuchse und die Wischerwelle zum Ausgleich eines eventuellen Radialspiels über konische Laufflächenabschnitte aneinanderliegen. Dies ist wichtig bei Ausführungen, bei denen die Lagerbuchse und die Wischerwelle aus Kunststoff gespritzt sind.

Fig.1

A 12 851                                                        **0187965**

<u>Wischanlage</u>

Die Erfindung bezieht sich auf eine Wischanlage gemäß den Merkmalen des
Oberbegriffs des Anspruchs 1.

Bei Wischanlagen moderner Kraftfahrzeuge werden zwecks Gewichtsersparnis in
zunehmendem Maße Kunststoffteile, beispielsweise Lagerbuchsen aus Kunststoff
gemäß der DE-PS 29 11 155 verwendet. Man ist auch bestrebt, die Wischerwelle
und die Kurbel möglichst einstückig aus Kunststoff herzustellen, wie das in
der DE-OS 30 45 504 beschrieben ist. Versuche haben jedoch gezeigt, daß
aufgrund des unvermeidbaren Schwundes beim Spritzen derartiger Teile die bei
Metallteilen üblichen Toleranzen nicht immer eingehalten werden können.
Insbesondere hat sich ergeben, daß bei Verwendung von Kunststofflagerbuchsen
ein zu großes Radialspiel auftreten kann, was zu einer erhöhten
Geräuschbildung im Wischlager führt.

Der vorliegenden Erfindung liegt daher die Aufgabe zugrunde, eine
Wischanlage der eingangs erwähnten Art so weiterzubilden, daß ein unzulässig
hohes Radialspiel beseitigt wird.

Diese Aufgabe wird erfindungsgemäß mit den kennzeichnenden Merkmalen des
Anspruchs 1 gelöst.

Der Erfindung liegt dabei der Gedanke zugrunde, daß dieses Radialspiel
zwischen Wischerwelle und Lagerbuchse wesentlich reduziert werden kann, wenn
man konische Laufflächenabschnitte an der Wischerwelle und der Lagerbuchse
vorsieht, die passend aneinander anliegen. Wenigstens im Bereich dieser
konischen Laufflächenabschnitte kann dann nämlich ein Radialspiel nicht mehr
auftreten.

Damit eine gute Anlage dieser konischen Laufflächenabschnitte auch nach
längerer Betriebszeit gewährleistet ist, wird man gemäß einer vorteilhaften
Weiterbildung der Erfindung die Lagerbuchse und die Wischerwelle federnd
gegeneinander spannen. Aus der DE-OS 2 107 706, dem DE-GM 82 32 482 oder der
GB-PS 1 071 565 sind zwar bereits Wischlager bekannt, bei denen durch Federmittel ein achsialer Spielausgleich zwischen Lagerbuchse und Wischerwelle erreicht wird, doch sind bei diesen bekannten Ausführungen keine konischen Laufflächenabschnitte zur Beseitigung des Radialspieles vorhanden.

In Abhängigkeit von der gewünschten Montagerichtung kann sich der konische Laufflächenabschnitt zur Wischarmseite oder zur entgegengesetzten Seite hin verjüngen bzw. erweitern. Die die Wischerwelle antreibende Kurbel wird man bei einer besonders bevorzugten Ausführung auf der Seite der Wischerwelle drehfest fixieren, zu der sich der konische Laufflächenabschnitt erweitert, weil dann gemäß einer vorteilhaften Weiterbildung der Erfindung die Kurbel und die Wischerwelle als einstückige Baueinheit herstellbar sind.

Diese Baueinheit wird vorteilhafterweise nach den in der Patentanmeldung P 33 47 441 erläuterten Gedanken aufgebaut, d.h. die aus einer Metallplatine ausgestanzte Kurbel wird mit einer Korrosionsschutzschicht aus Kunststoff überzogen und an die Kurbel wird ein Kugelbolzen zur Anlenkung einer Schubstange angespritzt. Diese metallische Kurbel wird außerdem so ausgebildet und abgewinkelt, daß ein rechtwinklig abstehender Abschnitt als Metallträger in die Wischerwelle eintaucht, was deren Stabilität erhöht.

Bei einer bevorzugten Ausführung schließt sich an den konischen Laufflächenabschnitt der Wischerwelle ein zylindrischer Abschnitt mit größerem Durchmesser an, der über die Kurbel hinausragt. Die Grundfläche dieses zylindrischen Abschnittes kann dann als Spannfläche für das Befestigungsteil eines Wischarms dienen, wobei große Drehmomente übertragen werden können, weil die gegeneinander gespannten Flächen verhältnismäßig groß sind.

Die Erfindung und weitere vorteilhafte Ausgestaltungen werden nachstehend anhand des in der Zeichnung dargestellten Ausführungsbeispieles näher erläutert. Es zeigen:

    Fig. 1  einen Längsschnitt durch ein Wischlager,

    Fig. 2  einen Schnitt entlang der Schnittlinie II-II,

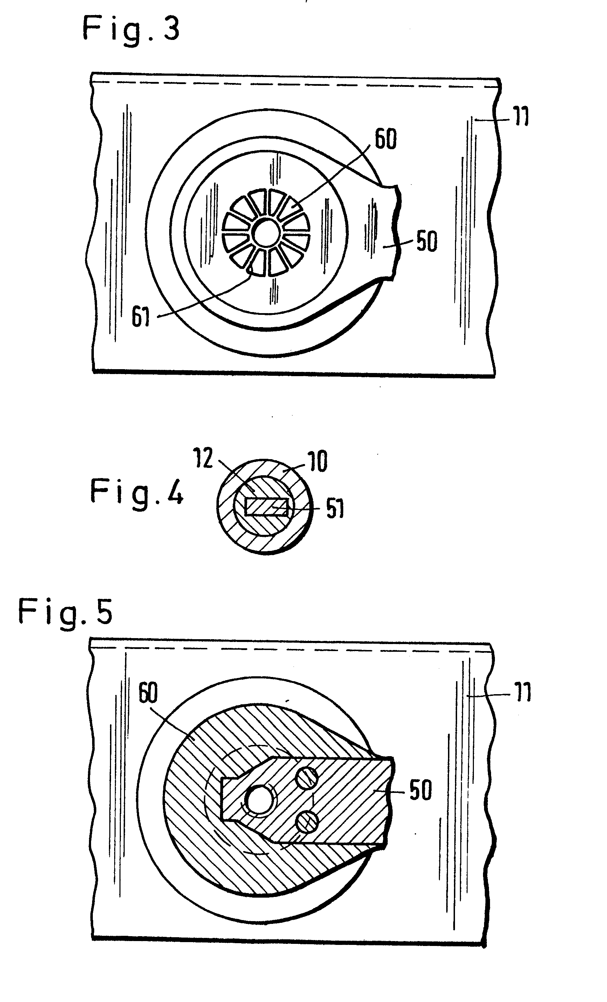

Fig. 3  eine Teilansicht in Pfeilrichtung P,

Fig. 4  einen Schnitt entlang der Schnittlinie IV-IV und

Fig. 5  einen Teilschnitt entlang der Schnittlinie V-V.


Zu dem Wischlager einer Wischanlage gehören in bekannter Weise eine
Lagerbuchse 10, die an der Karosserie 11 eines Fahrzeuges befestigbar ist.
In der Lagerbuchse 10 ist eine Wischerwelle 12 drehbeweglich geführt, die
von einer Kurbel 13 antreibbar ist. Mit 14 ist ein nur teilweise
dargestellter Wischarm bezeichnet, der in bekannter Weise ein
Befestigungsteil 15 aufweist.


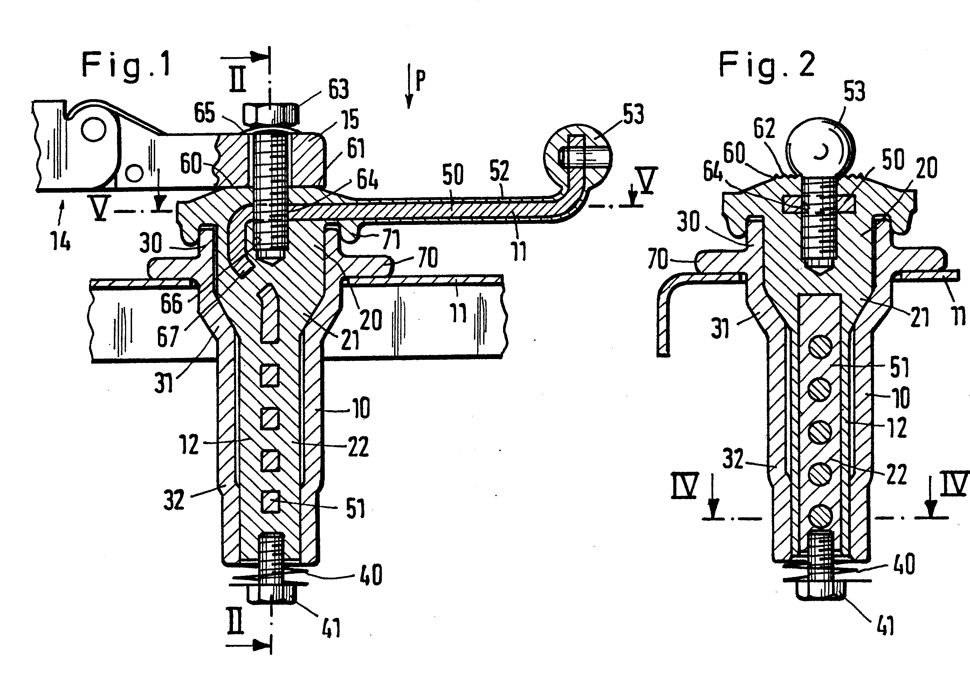

Aus den Fig. 1 und 2 erkennt man, daß die Wischerwelle 12 drei Abschnitte
mit unterschiedlichen Durchmessern aufweist. Am wischarmseitigen Ende hat
die Wischerwelle 12 einen zylindrischen Abschnitt 20 mit einem
verhältnismäßig großen Durchmesser. Dieser Abschnitt 20 schließt sich an
einen konischen Abschnitt 21 an, der sich zur Wischarmseite hin erweitert.
Schließlich erkennt man einen weiteren zylindrischen Abschnitt 22 mit einem
kleineren Durchmesser, der wesentlich länger ist als der Abschnitt 20 und
fast bis zum Ende der Lagerbuchse 10 reicht.


Die aus Kunststoff gespritzte Lagerbuchse 10 hat ebenfalls drei Abschnitte
mit unterschiedlichem Durchmesser, nämlich einen Abschnitt 30 mit großem
Durchmesser, einen konischen Abschnitt 31 sowie einen Abscnitt 32 mit
kleinerem Durchmesser. Man erkennt aus der Zeichnung, daß die Wandstärke der
Lagerbuchse 10 im wesentlichen konstant ist. Damit vermeidet man eine
unterschiedlich starke Schrumpfung des Kunststoffes in den einzelnen
Bereichen, was zu unzulässigen Toleranzabweichungen führen könnte.


Wesentlich für die vorliegende Erfindung ist nun, daß die konischen
Abschnitte 21 bzw. 31 an der Wischerwelle 12 bzw. der Lagerbuchse 10
aufeinander abgestimmte Laufflächen bilden. Diese Laufflächenabschnitte 21
und 31 liegen spielfrei aneinander, weil die Lagerbuchse 10 und die
Wischerwelle 12 durch Federmittel 40 in Achsrichtung gegeneinander verspannt

0187965

sind. Bei dem gezeigten Ausführungsbeispiel wird als Federmittel 40 eine
Schraubenfeder verwendet, die sich einerseits an der Lagerbuchse 10 und
andererseits am Kopf einer Schraube 41 abstützt, die auf der dem Wischarm
gegenüberliegenden Seite in die Wischerwelle 12 eingeschraubt ist. Die
Federkraft ist mittels dieser Schraube 41 einstellbar, sodaß eine den
Erfordernissen entsprechende Anlage der Laufflächenabschnitte 21 und 31
gewährleistet ist. Durch die Feder wird dabei eine automatische Nachstellung
bei einem eventuell auftretenden Verschleiß sichergestellt, sodaß auch nach
längerer Betriebszeit kein zu großes Spiel zwischen Wischerwelle 12 und
Lagerbuchse 10 auftritt und damit das Wischlager geräuscharm arbeitet.

Die vorliegende Erfindung hat vor allem dann besondere Bedeutung, wenn auch
die Wischerwelle aus Kunststoff hergestellt ist, weil dann auch die beim
Spritzen der Wischerwelle auftretenden Toleranzen berücksichtigt bzw.
ausgeglichen werden. Es wird jedoch darauf hingewiesen, daß die
Grundgedanken der vorliegenden Erfindung auch dann mit Vorteil anwendbar
sind, wenn die Lagerbuchse und die Wischerwelle in herkömmlicher Weise aus
Metall hergestellt sind.

Bei dem in der Zeichnung dargestellten Ausführungsbeispiel sind Wischerwelle
12 und Kurbel 13 einstückig als Baueinheit hergestellt. Aus einer
Blechplatine wird ein Streifen 50 ausgestanzt und in die in der Zeichnung
ersichtliche Form gebogen. Ein Teil des Streifens bildet die Kurbel 13, ein
davon im wesentlichen rechtwinklig abstehender Streifen dient als
Metallträger 51 zur Versteifung der Wischerwelle 12. Der die Kurbel 13
bildende Teil ist mit einer Korrosionsschutzschicht 52 aus Kunststoff
überzogen. An die Kurbel 13 ist außerdem einstückig ein Kugelzapfen 53
angespritzt, wie das in der eingangs erwähnten Patentanmeldung näher
beschrieben ist. Der Metallträger 51 ist zur Bildung der Abschnitte 20, 21
und 22 der Wischerwelle 12 ebenfalls mit Kunststoff umspritzt. Die
Wischerwelle 12, die Schutzschicht 52 und der Kugelbolzen 53 werden
vorzugsweise in einem Arbeitsgang und vorzugsweise aus dem gleichen
Kunststoff gespritzt.

Fig 1 und 2 zeigen, daß der zylindrische Abschnitt 20 über die Kurbelebene hinausragt und endseitig eine Grundfläche 60 mit einem verhältnismäßig großen Durchmesser aufweist, die als Spannfläche für das Befestigungsteil 15 des Wischarms 14 dient und wegen der großen Fläche eine Übertragung hoher Drehmomente ermöglicht. In der Zeichnung ist nur angedeutet, daß diese Grundfläche 60 und auch die daran anliegende Fläche 61 des Befestigungsteils 15 mit einer Feinverzahnung 62 versehen sind, sodaß der Wischarm in beliebiger Stellung drehfest mit der Baueinheit aus Wischerwelle und Kurbel verbunden werden kann. Dazu dient eine Schraube 63, die mit einem Gewinde 64 in der Kurbel 13 zusammenwirkt. Bei der in der Zeichnung dargestellten Ausführung wird also das Drehmoment von der Kurbel 13 direkt auf das Befestigungsteil 15 übertragen und die Wischerwelle 12 hat keine drehmomentübertragende, sondern lediglich eine führende Funktion. Da das Befestigungsteil 15 auf einer Kunststofffläche aufliegt und eine gewisse Nachgiebigkeit des Kunststoffes im Laufe der Zeit nicht ausgeschlossen werden kann, wird das Befestigungsteil 15 federnd gegen die Grundfläche 60 gedrückt, wozu die Tellerfeder 65 dient.

Die Schraube 63 endet in einer Sacklochbohrung 66 in dem zylindrischen Abschnitt 20 der Wischerwelle 12. Der Metallträger 51 hat einen seitlich neben dieser Sacklochbohrung verlaufenden Abschnitt 67 und ist unterhalb der Sacklochbohrung 66 derart abgewinkelt, daß er im übrigen Bereich zentrisch in der Wischerwelle 12 liegt. Dabei ist die Höhe des zylindrischen Abschnittes 20 auf die Länge der Sacklochbohrung 66 derart abgestimmt, daß der Metallträger 51 etwa im anschließenden Endbereich des konischen Abschnittes 21 seine zentrale Lage erreicht, wobei natürlich eine ausreichende Wandstärke zwischen dem Metallträger 51 und der Sacklochbohrung 66 gewährleistet sein muß.

Zu dem in der Zeichnung gezeigten Ausführungsbeispiel wird abschließend noch auf folgende wesentliche Einzelheiten hingewiesen. Die Lagerbuchse 10 hat einen radial abstehenden Auflageflansch 70 im Bereich des Abschnittes 30 mit dem größeren Durchmesser. Damit erreicht man eine sichere Abstützung der Lagerbuchse an der Karosserie. Der konische Abschnitt 31 beginnt unmittelbar unterhalb der Karosserie, liegt also nahe der Kurbelebene, was sich günstig auf die Laufeigenschaften auswirkt.

An die Baueinheit aus Wischerwelle 12 und Kurbel 13 ist ein umlaufender Kragen 71 angespritzt, der die Wand der Lagerbuchse 13 stirnseitig umgreift und damit eine Art Labyrinthdichtung bildet, sodaß keine Fremdkörper in die Lagerbuchse 13 eindringen können.

In der Zeichnung ist das derzeit bevorzugte Ausführungsbeispiel dargestellt, bei dem die Kurbel am wischarmseitigen Ende der Wischerwelle drehfest fixiert ist und bei dem folglich eine Montage der Baueinheit aus Kurbel und Wischerwelle von der Karosserievorderseite her erfolgt. Sofern bei anderen Ausführungen eine Montage von der Karosserieinnenseite her erfolgen soll, wird man die Laufflächenabschnitte 21 bzw. 31 so anordnen, daß sie sich zur Wischarmseite hin konisch verjüngen. Dabei wird die Kurbel dann wieder an dem Abschnitt mit dem größeren Durchmesser fixiert, was aus Stabilitätsgründen vorteilhaft ist.

Insgesamt wird mit den wesentlichen Merkmalen der vorliegenden Erfindung ein Wischlager für eine Scheibenwischanlage geschaffen, das einfach und kostengünstig herstellbar ist und dennoch hervorragende Laufeigenschaften auch nach längerer Betreibszeit aufweist.

SWF Auto-Electric GmbH

7120 Bietigheim-Bissingen

0187965

PAL/A 12 851

Kübler/KÜ

2.1.1985

Wischanlage

Patentansprüche:

1. Wischanlage für Kraftfahrzeuge mit einer in einer Lagerbuchse geführten Wischerwelle, dadurch gekennzeichnet, daß die Lagerbuchse (10) und die Wischerwelle (12) aufeinander abgestimmte konische Laufflächenabschnitte (21,31) aufweisen.

2. Wischanlage nach Anspruch 1, dadurch gekennzeichnet, daß die Lagerbuchse (10) und die Wischerwelle (12) durch Federmittel (40) in Achsrichtung derart gegeneinander verspannt sind, daß der konische Laufflächenabschnitt (21) an der Wischerwelle (12) auf dem konischen Laufflächenabschnitt (31) der Lagerbuchse (10) spielfrei aufliegt.

3. Wischanlage nach Anspruch 2, dadurch gekennzeichnet, daß die Kraft des Federmittels (40) einstellbar ist.

4. Wischanlage nach Anspruch 3, dadurch gekennzeichnet, daß als Federmittel (40) eine Schraubenfeder verwendet wird, die sich einerseits an der Lagerbuchse (10) und andererseits am Kopf einer Schraube (41) abstützt, die in die Wischerwelle (12) eingeschraubt ist.

5.    Wischanlage nach wenigstens einem der Ansprüche 1 bis 4, dadurch gekennzeichnet, daß sich die Lauffächenabschnitte zur Wischarmseite hin konisch verjüngen.

6.    Wischanlage nach wenigstens einem der Ansprüche 1 bis 4, dadurch gekennzeichnet, daß sich die Lauffächenabschnitte (21,31) zur Wischarmseite hin konisch erweitern.

7.    Wischanlage nach Anspruch 5 oder 6, dadurch gekennzeichnet, daß eine Kurbel (13) zum Antrieb der Wischerwelle (12) auf der Seite der Wischerwelle (12) drehfest fixiert ist, zu der sich der konische Lauffächenabschnitt (21,31) erweitert.

8.    Wischanlage nach Anspruch 7, dadurch gekennzeichnet, daß die Kurbel (13) am wischarmseitigen Ende an der Wischerwelle (12) drehfest fixiert ist.

9.    Wischanlage nach Anspruch 7 oder 8, dadurch gekennzeichnet, daß die Kurbel (13) und die Wischerwelle (12) als einstückiges Bauteil ausgebildet sind.

10.    Wischanlage nach Anspruch 9, dadurch gekennzeichnet, daß die Wischerwelle (12) aus Kunststoff gefertigt ist und durch einen Metallträger (51) versteift ist, der einstückig mit der Kurbel (13) hergestellt ist.

11.    Wischanlage nach Anspruch 10, dadurch gekennzeichnet, daß die Kurbel (13) und der Metallträger (51) aus einer Blechplatine ausgestanzt und im wesentlichen rechtwinklig zueinander abgebogen sind.

12.    Wischanlage nach Anspruch 10 oder 11, dadurch gekennzeichnet, daß die Kurbel (13) mit einer Korrosionsschutzschicht (52) aus Kunststoff überzogen ist.

13.    Wischanlage nach wenigstens einem der Ansprüche 10 bis 12, dadurch gekennzeichnet, daß ein Kugelbolzen (53) zur Anlenkung einer Schubstange an die Kurbel (13) angespritzt ist.

14. Wischanlage nach Anspruch 11, dadurch gekennzeichnet, daß die Wischerwelle (12), die Korossionsschutzschicht (52) und der Kugelbolzen (53) vorzugsweise in einem Arbeitsgang aus dem gleichen Kunststoff gespritzt sind.

15. Wischanlage nach wenigstens einem der vorhergehenden Ansprüche, dadurch gekennzeichnet, daß sich an den konischen Laufflächenabschnitt (21) auf der Seite mit dem größeren Durchmesser ein über die Kurbel (13) hinausragender zylindrischer Abschnitt (20) anschließt und das Befestigungsteil (15) eines Wischarms (14) unmittelbar mit der Grundfläche (60) dieses zylindrischen Abschnittes (20) der Wischerwelle (12) verspannt ist.

16. Wischanlage nach Anspruch 15, dadurch gekennzeichnet, daß die auf der Grundfläche (60) des zylindrischen Wischerwellenabschnittes aufliegende Fläche (61) des Befestigungsteils (15) mit einer Verzahnung (62) versehen ist.

17. Wischanlage nach 15 oder 16, dadurch gekennzeichnet, daß die Grundfläche (60) dieses zylindrischen Wischerwellenabschnittes ebenfalls mit einer Verzahnung (62) versehen ist.

18. Wischanlage nachnach wenigstens einem der Ansprüche 15 bis 17, dadurch gekennzeichnet, daß das Befestigungsteil (15) mittels einer Schraube (63) an der Baueinheit aus Wischerwelle (12) und Kurbel (13) gehalten ist, wobei diese Schraube (63) mit einem Gewinde (64) im Metallträger (51) zusammenwirkt.

19. Wischanlage nach Anspruch 18, dadurch gekennzeichnet, daß das Befestigungsteil (15) federnd gegen die Grundfläche (60) des zylindrischen Wischerwellenabschnittes gedrückt wird.

20. Wischanlage nach Anspruch 18, dadurch gekennzeichnet, daß die Schraube (63) in einer Sacklochbohrung (66) der Wischerwelle (12) endet und daß der Metallträger (51) einen seitlich neben dieser Sacklochbohrung (66) verlaufenden Abschnitt (67) aufweist und daran anschließend derart abgewinkelt ist, daß er im übrigen Bereich zentrisch in der Wischerwelle (12) liegt.

21. Wischanlage nach Anspruch 20, dadurch gekennzeichnet, daß die Höhe des zylindrischen Abschnittes (22) auf die Länge des Sackloches (66) derart abgestimmt ist, daß der Metallträger (51) etwa im Endbereich des konischen Laufflächenabschnittes (21) seine zentrale Lage erreicht.

22. Wischanlage nach wenigstens einem der vorhergehenden Ansprüche, dadurch gekennzeichnet, daß sich an den konischen Abschnitt (21) auf der Seite mit dem kleineren Durchmesser ebenfalls ein zylindrischer Wischerwellenbereich (22) anschließt, wobei der Abschnitt (22) mit dem kleineren Durchmesser wesentlich länger ist als der Abschnitt (20) mit dem größeren Durchmesser.

23. Wischanlage nach wenigstens einem der vorhergehenden Ansprüche, dadurch gekennzeichnet, daß die Lagerbuchse (13) aus Kunststoff gespritzt ist und über ihre gesamte Länge eine im wesentlichen konstante Wandstärke, also ebenfalls einen Abschnitt (30) mit größerem Durchmesser, einen konischen Abschnitt (31) und einen Abschnitt (32) mit kleinerem Durchmesser aufweist.

24. Wischanlage nach Anspruch 23, dadurch gekennzeichnet, daß die Lagerbuchse (10) einen radial abstehenden Auflageflansch (70) im Bereich des Abschnittes (32) mit dem größeren Durchmesser aufweist.

25. Wischanlage nach wenigstens einem der vorhergehenden Ansprüche, dadurch gekennzeichnet, daß an die Baueinheit aus Wischerwelle (12) und Kurbel (13) ein umlaufender Kragen (71) angespritzt ist, der die Wand der Lagerbuchse (10) übergreift.

Fig.1

Fig.2

0187965

0187965

Fig.3

Fig.4

Fig.5